# EUROPEAN PATENT APPLICATION

(11) **EP 2 750 297 A1**
(43) Date of publication of application: **02.07.2014**
(21) Application number: 12460096.6
(22) Date of filing: 27.12.2012
(51) Int. Cl.: H04B 1/48

(54) **METHOD AND SYSTEM FOR INPUT SIGNAL CONDITIONING FOR RADIO TRANSCEIVER CIRCUITS**

(71) Applicant: Efekt Technologies Sp. z o .o., 28-236 Rytwiany (PL)
(72) Inventor: Worek, Cezary, 30-240 Kraków (PL); Krzak, Lukasz, Pawel, 30-868 Kraków (PL)
(74) Representative: Kaminski, Zbigniew

(57) **Abstract**

The present invention relates to a method for input signal conditioning for monolithic radio transceiver circuits utilizing a single antenna transceiver system and a circuit that separates a transmit path and a receive path, including a process for amplitude control and elimination of signals with frequencies unwanted in the receive path, in which the signal from the antenna is outputted to a high-frequency switch separating the transmit and receive paths, and next performing, during operation of the receiver, signal processing involving the elimination of selected frequency bands in the bandpass filter and signal amplitude control, then the signal is outputted to an input of the monolithic radio transceiver circuit, and while operating in the transmit mode, the signal is outputted in parallel to a level detector. The method is characterized in that in the receive mode the amplitude control of the input signal is carried out after pre-filtering and amplification in an open-loop feedback, wherein the change of the operation mode of the transmission direction is carried out on the basis of power measurement results of the high-frequency signal and if a pre-defined threshold value of power of the signal is exceeded then there will be an automatic switch of the system operating mode from receiving to transmitting.

The invention also relates to an input signal conditioning system for monolithic radio transceiver circuits utilizing a single antenna transceiver system, and a circuit that separates a transmit path and a receive path. The system is characterized in that the receive path comprises a pre-amplifying and filtering circuit (FLNA) with a fixed amplification of a signal, wherein an input of this circuit is connected to a control element (ER) and to an input of a level detector (DL1), while an output of this detector (DL1) is connected to a control input of the control element (ER) to form an open-loop feedback, whereas the transmit path has a signal level detector (DL2), whose input is connected to an output of the radio transceiver circuit (MRUNO), while an output of the detector (DL2) is connected to at least a high frequency switching key (SW1).

## Description

The present invention relates to a method and system for input signal conditioning for monolithic, bi-directional radio transceiver circuits operating in real-time division.

Wireless radio communication modules are now being used in a large number of portable electronic devices such as mobile telephones, electronic notebooks, the latest generation of media consumption meters, in sensor networks and similar applications. Large demand for radio transmission of data caused a significant progress in the development of monolithic integrated circuits that can now contain, within a single structure, complete transceiver paths together even with digital data processing circuits and microcontrollers. In addition, their application is extremely simplified and requires only a few or several external passive components. The main advantages of monolithic radio integrated circuits include small size, low power consumption, the ability to adapt programmable parameters and reliability and, because of the scale of production, a very low price. However, the independent use of monolithic radio transceiver circuits in sophisticated industrial automation applications encountered large problems resulting from insufficient radio parameters, especially in relation to too small dynamics, selectivity and immunity to intermodulation. Currently, the market is dominated by low-cost solutions for consumer electronics, and close to a hundred times more expensive solutions for the industry. Construction of smart metering systems, networks for managing lighting infrastructures etc. set new challenges involving the construction of radio modules with improved radio parameters which are better than those achieved in monolithic radio transceiver circuits while significantly cheaper than those used in industrial automation systems. To achieve this objective it is possible to provide a monolithic radio transceiver circuit with an additional input signal conditioning system. This significantly reduces developing costs and final product cost as well as time of introducing the product to the market as compared with the solutions proposed by industrial automation, while improving critical radio parameters such as dynamics, selectivity and immunity to intermodulation. Some companies have recognized this problem and introduced to the market specialized integrated circuits to increase the input sensitivity and output power (e.g, CC1190 of Texas Instruments), however, other parameters such as selectivity and immunity to intermodulation have not been improved and in some cases even worsened.

The disadvantage of modern solutions using high throughput and spread spectrum modulation based on standards such as ZigBee, Wi-Fi, Bluetooth or WirelessHart is the lack of level or amplification adjustment controls in external radio front-end systems. It is very difficult with the classical solutions because the systems with a negative feedback loop should then work with time constants of 10-130% of the time duration of the packet preamble and it is time of a few microseconds in high bit rates.

In addition, much of the solutions of monolithic radio transceiver circuits and wireless modules that are on the market are equipped with a single high-frequency antenna connector. Depending on the needs, the connector is used as a single input / output or as a separate input and output, however, it often suffers from lack of derived control signals that inform about an operating mode of a transmitter or receiver.

U.S. Patent No. U.S. 6,892,080 B2 describes a system for improving radio parameters for a cellular telephone including a transmit path and a gain adjustment to a required level within the transmit path. Additionally, duplexers are provided due to operation of a transmitter and receiver at different frequencies, while a power amplifier circuit is activated by a directional coupler connected to a level detector and to a processor gain control circuit.

European patent application No. EP 0 777 324 A2 describes an automatic gain control circuit with an open-loop feedback controlled by a level detector connected to an analogue to digital converter, while a main signal path is composed of a delay line and switched gain amplifiers arranged in cascade, so that the speed of the automatic gain control circuit was greatly increased.

Polish patent description P 385 023 discloses a method and system for correcting a frequency band of an input signal for monolithic radio receivers, basing on the fact that a first frequency converter converts the input signal having an input frequency into a signal of lower frequency, then the signal processing is performed on lower frequency by eliminating selected frequency bands and by amplitude control. After the signal processing the signal is fed to a second frequency converter in which the signal of lower frequency is converted back to a signal whose frequency is equal to the frequency of the input signal, then the output signal is processed via a monolithic tunable radio receiver. The drawback of this solution in comparison to the proposed one is more complex and expensive construction.

U.S. Patent Application No. U.S. 2009/0253384 A1 discloses a device for conditioning a bidirectional input radio signal based on a single amplifier with use of keys changing the direction of the amplifier operation.

U.S. Patent No. U.S. 7,205,842 B2 describes a method and system for continuous gain control having a switch for control with a closed-loop feedback and an open-loop, based on interpolation stored permanently in a table /memory of a microprocessor.

U.S. Patent No. U.S. 8,140,025 B2 discloses a system for conditioning an input signal for radio transceiver circuits, which eliminates the need for high frequency switching circuits and the system was designed so that there is a possibility of its implementation in a selected technology of integrated circuit production. The circuit is dedicated for two-way systems working with time division. An operation control of a transmitter or receiver is done by controlling supply voltage, polarization of an input low-noise amplifier, and an output power amplifier. The disadvantage of this solution is the need for extended and complex matching circuits as well as a complex design predisposing them for the integrated circuit technologies.

All the above methods and signal conditioning systems for radio transceiver circuits do not fully match the low-cost and low-volume solutions for the market of professional automation systems, measuring and monitoring process parameters.

The object of the present invention is to provide a method and system for input signal conditioning for monolithic, bi-directional radio transceiver circuits operating in real-time division, which would improve, in relation to solutions based on integrated circuits, critical radio parameters such as dynamics, selectivity and immunity to intermodulation.

The essence of the method for input signal conditioning according to the present invention for monolithic, bi-directional radio transceiver circuits operating in real-time division according to claim 1 comprises the steps according to which pre-amplification and filtering of an input radio signal is performed in a circuit (FLNA), and its amplification is fixed all the time during the receive mode, while adjustment of an input signal level outputted to the monolithic radio transceiver circuit (MRUNO) is performed in a fast circuit with an open-loop feedback from a level detector (DL1) and amplification or attenuation control element (ER), wherein switching of the transmission direction is performed by a level detector (DL2) used to change the transmit mode based on the power measurement results of high-frequency signals and it switches the system from the receive mode to the transmit mode for high power signals, and back to the receive mode for low power signals.

The essence of an input signal conditioning system according to the present invention for monolithic, bi-directional radio transceiver circuits operating in time division according to claim 2 is characterized by a receive path that comprises a pre-amplifying and filtering circuit (FLNA) with a fixed amplification of the signal, wherein an input of this circuit is connected to a control element (ER) and to an input of a level detector (DL1), while an output of this detector (DL1) is connected to a control input of the control element (ER) to form an open-loop feedback, and by a transmit path that has a signal level detector (DL2), whose input is connected to an output of a radio transceiver circuit (MRUNO), while an output of the level detector (DL2) is connected to at least a high frequency switching key (SW1).

In the system according to the present invention, the control element (EP) is an amplifier with adjustable gain and / or attenuation.

In the system according to the present invention the signal level detector (DL2) for controlling signal amplification and switching from the receive mode to the transmit mode is connected to an additional switching key (SW2) and to amplifiers (FPA) and (FLNA).

Exemplary embodiments of the present invention will be described below with reference to the accompanying drawings, of which: Figure 1 is a simplified block diagram of a system for input signal conditioning for modules or monolithic, bi-directional radio transceiver circuits (MRUNO), for carrying out the method according to the present invention, Figure 2 is a diagram of the system according to the present invention with a single antenna connector Tx / Rx, and Figure 3 is a diagram of the system according to the present invention with a separate receive input Rx and transmit output Tx.

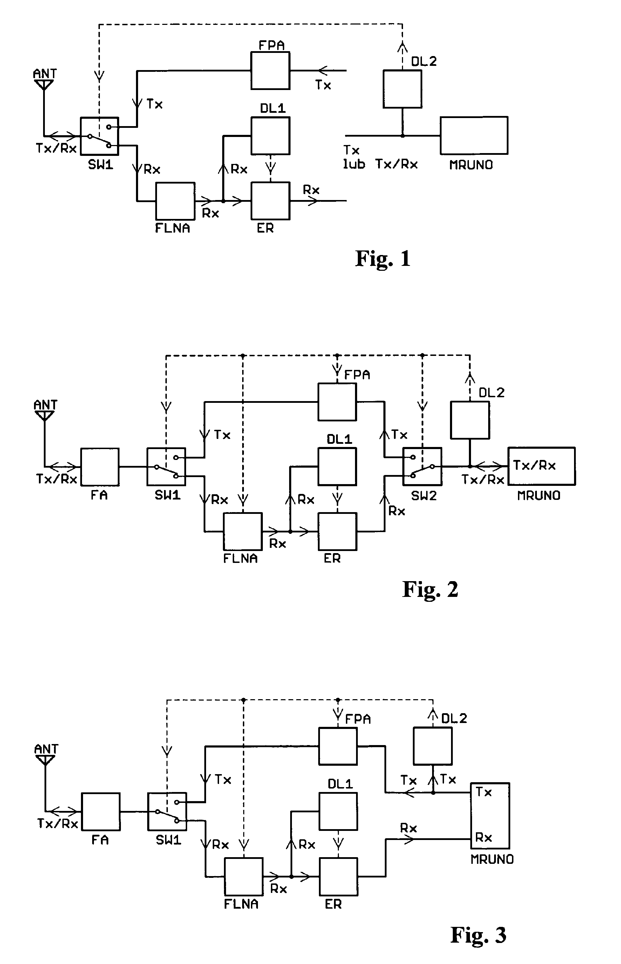

The block diagram of an input signal conditioning system for modules or monolithic, bi-directional radio transceiver circuits (MRUNO), as shown in Figure 1, comprises:
- an antenna (ANT) and a transmit-receive mode switch (SW1) in a transmit-receive path;
- a low-noise amplifying and filtering circuit (FLNA) for an input signal in a receive path;
- an input signal level detector (DL1) in the receive path;
- a control element (ER) for controlling a level of the input signal in the receive path;
- a signal level detector (DL2) in a transmit path or transmit-receive path;
- a power amplifier (FPA) in the transmit path.

In the normal receive mode the signal from the antenna (ANT) is outputted to the transmit-receive mode switch (SW1) and to the low-noise amplifying and filtering circuit (FLNA) for the input signal, which is characterized by a fixed amplification during the receive mode. Then the input signal level detector (DL1) measures the level of this signal, and on the basis of its indications, the amplification or attenuation control element or circuit (ER) performs signal conditioning so that the output signal supplied to the input of the transceiver circuit (MRUNO) was within its dynamic operation.

The transmit mode is detected by the signal level detector (DL2) in the transmit path (Tx) or transmit-receive path (Tx / Rx) of the transceiver circuit (MRUNO) and at high power, that is after exceeding a threshold value, the detector switches the system to the transmit mode, while at low power - to the receive mode by means of the appropriate key (SW1). In the transmit mode, the signal from the transceiver circuit (MRUNO) is outputted to the signal level detector (DL2) and to the high-frequency power amplifier (FPA) and by means of the key (SW1) the signal is outputted to the antenna (ANT).

In the arrangement shown in Figures 2 and 3, in the receive mode the useful signal induced in the antenna (ANT) is outputted to the antenna filter (FA), which is also a matching circuit. Next the signal is outputted to the key (SW1) and the low-noise amplifying and filtering circuit (FLNA) for the input signal, which is characterized by a constant amplification during the receive mode. The pre-amplified and filtered input signal is then outputted to the input signal level detector (DL1) and the amplification or attenuation control element or circuit (ER). Basing on signal measurements the signal level detector (DL1) performs signal conditioning so that signal power supplied to the input of the transceiver circuit (MRUNO) was within its dynamic operation. A characteristic feature of such constructed gain control circuit is that it takes place in an open-loop feedback and can therefore be very fast - even with the time constant of a few microseconds. When the radio transceiver circuit (MRUNO) has a separate receive input Rx and transmit output Tx the signal is directly outputted to a receive input (Figure 3). If the radio transceiver circuit (MRUNO) has a single antenna connector the signal is first outputted to a high frequency key (SW2), and then from this key to the input of the transceiver circuit (MRUNO). The transmit mode is detected by the signal level detector (DL2) in the transmit path (Tx) (Figure 3) or in the transmit-receive path (Tx / Rx) (Figure 2) of the transceiver circuit (MRUNO) and the detector switches the key (SW1) when the operating mode changes from receiving to transmitting. In addition, the same signal controls the gain and power consumption in the paths of the transmitter (FPA) and receiver (FLNA) in order to minimize current consumption and ensure the stable operation of the high-frequency circuit by turning off active elements of the receive path while in the transmit mode and turning off active elements of the transmit path while in the receive mode.

In the transmit mode, the signal from the transceiver circuit (MRUNO) is outputted to the signal level detector (DL2) and to the high-frequency power amplifier (FPA) and next through the key (SW1) to the antenna (ANT).

An advantage of the solution according to the present invention is that it has simple and inexpensive structure being made of discrete elements with fast high-frequency keys, thereby reducing the sensitivity to the intermodulation distortion, reducing the noise level in the receive path and adapting the signal level to the operation dynamics of the radio transceiver circuit (MRUNO).

The method and system according to the present invention can be used especially in the mass production of elements for industrial automation.

## Claims

1. A method for input signal conditioning for monolithic radio transceiver circuits utilizing a single antenna transceiver system and a circuit that separates a transmit path and a receive path, including a process for amplitude control and elimination of signals with frequencies unwanted in the receive path, in which the signal from the antenna is outputted to a high-frequency switch separating the transmit and receive paths, and next performing, during operation of the receiver, signal processing involving the elimination of selected frequency bands in the bandpass filter and signal amplitude control, then the signal is outputted to an input of the monolithic radio transceiver circuit, and while operating in the transmit mode, the signal is outputted in parallel to a level detector, **characterized in that** in the receive mode the amplitude control of the input signal is carried out after pre-filtering and amplification in an open-loop feedback, wherein the change of the operating mode of the transmission direction is carried out on the basis of power measurement results of the high-frequency signal and if a pre-defined threshold value of power of the signal is exceeded then there will be an automatic switch of the system operating mode from receiving to transmitting.

2. An input signal conditioning system for monolithic radio transceiver circuits utilizing a single antenna transceiver system, and a circuit that separates a transmit path and a receive path, **characterized in that** the receive path comprises a pre-amplifying and filtering circuit (FLNA) with a fixed amplification of the signal, wherein an input of this circuit is connected to a control element (ER) and to an input of a level detector (DL1), while an output of this detector (DL1) is connected to a control input of the control element (ER) to form an open-loop feedback, whereas the transmit path has a signal level detector (DL2), whose input is connected to an output of the monolithic radio transceiver circuit (MRUNO), while an output of the detector (DL2) is connected to at least a high frequency switching key (SW1).

3. A system according to claim 2, **characterized in that** its control element (ER) is an amplifier with adjustable gain.

4. A system according to claim 2, **characterized in that** its control element (ER) is an amplifier with adjustable attenuation.

5. A system according to claim 2, **characterized in that** its signal level detector (DL2) for controlling signal amplification and switching from the receive mode to the transmit mode is connected to an additional switching key (SW2) and to amplifiers (FPA) and (FLNA).
